# EUROPÄISCHE PATENTANMELDUNG

(11) **EP 2 343 669 A1**
(43) Veröffentlichungstag der Anmeldung: **13.07.2011**
(21) Anmeldenummer: 11003461.8
(22) Anmeldetag: 13.01.2006
(51) Int. Cl.: G06K 7/10

(54) **Codeleser**

(30) Priorität: 07.02.2005 DE 102005005536
(62) Teilanmeldung aus: 06000754.9
(71) Anmelder: SICK AG, 79183 Waldkirch/Breisgau (DE)
(72) Erfinder: Reichenbach, Jürgen, 79312 Emmendingen (DE); Runge, Wolfram, Dr., 79104 Freiburg (DE); Weber, Helmut, 79312 Emmendingen (DE)
(74) Vertreter: Manitz, Finsterwald & Partner GbR

(57) **Zusammenfassung**

Die Erfindung betrifft einen Codeleser mit einer integrierten Lichtquelle zur Ausleuchtung eines Lesebereichs, einer Sensormatrix und einer dieser vorgelagerten Empfangsoptik, bei dem sich die Lichtaustrittsfläche der Lichtquelle im oder nahe vor dem Schärfentiefebereich der Empfangsoptik befindet. Die Lichtquelle und die Empfangsoptik sind in einem Optikkopf untergebracht, welcher relativ zu den restlichen Codeleser-Bestandteilen in unterschiedlichen Positionen justierbar ist.

## Beschreibung

Die Erfindung betrifft einen Codeleser mit einer integrierten Lichtquelle zur Ausleuchtung eines Lesebereichs, sowie mit einer Sensormatrix und einer dieser vorgelagerten Empfangsoptik.

Derartige Codeleser sind aus dem Stand der Technik in vielfachen Ausführungsformen bekannt und werden unter anderem auch dafür eingesetzt, Codierungen zu lesen, die direkt auf das jeweilige Trägermaterial durch eine Verformung desselben aufgebracht wurden. Derartige Codierungen, die beispielsweise als so genannte DPM-Codierungen (Direct Part Marking-Codierungen) bekannt sind, werden beispielsweise erzeugt, indem das Trägermaterial mit einem Hochenergie-Laser oder mittels Nadelprägen ("dot peening") bearbeitet wird. Beiden Verfahren ist gemeinsam, dass an jeweils gewünschten Stellen Ausnehmungen bzw. Vertiefungen im Trägermaterial erzeugt werden, welche dann letztlich in ihrer Gesamtanordnung dem gewünschten Code entsprechen.

DPM-Codierungen werden insbesondere für zweidimensionale Codes eingesetzt, welche beispielsweise aus innerhalb einer Fläche gezielt angeordneten Punkten bestehen, wobei jeder Punkt einer Ausnehmung bzw. Vertiefung im Trägermaterial entspricht.

Das Lesen von DPM-Codierungen gestaltet sich schwierig, wenn der Codeleser senkrecht über der Codierung angeordnet wird, da die im Codeleser integrierte Lichtquelle die Codierung dann unter einem Einfallswinkel beleuchtet, welcher zumindest weitgehend mit der optischen Achse des Codelesers zusammenfällt, was zur Folge hat, dass zwischen den mit Ausnehmungen versehenen Bereichen des Trägermaterials und denjenigen Bereichen, die keine Ausnehmungen aufweisen, kein starker Kontrastunterschied auftritt. Dementsprechend arbeitet man hier üblicherweise nicht mit einer im Codeleser integrierten Lichtquelle, sondern vielmehr mit einer externen, separat vorzusehenden Lichtquelle, die im Sinne einer Dunkelfeldbeleuchtung die Codierung unter einem sehr schrägen Einfallswinkel beleuchtet. Diejenigen Bereiche des Trägermaterials, die keine Ausnehmungen aufweisen, erzeugen in diesem Fall dann eine sehr flache Lichtreflexion, so dass das reflektierte Licht nicht zum Codeleser gelangt und die genannten Bereiche im Codeleser letztlich dunkel erscheinen. Das schräg auf die Ausnehmungen auftreffende Licht wird bei einem schrägen Lichteinfall hingegen in ausreichendem Maße zum Codeleser reflektiert, so dass die Ausnehmungen im Codeleser letztlich hell erscheinen und klar von denjenigen - dunkel erscheinenden - Bereichen unterschieden werden können, die keine Ausnehmungen aufweisen.

Nachteilig an den beschriebenen bekannten Anordnungen zum Lesen von DPM-Codierungen ist somit die Tatsache, dass die üblicherweise in einem Codeleser vorhandene integrierte Lichtquelle nicht verwendet werden kann und zusätzlich eine externe Lichtquelle vorgesehen werden muss, welche für die beschriebene schräge Beleuchtung der Codierung sorgt. Diese externe Lichtquelle muss darüber hinaus relativ zum Codeleser korrekt justiert werden, was einen zusätzlichen Aufwand bedeutet.

Eine Aufgabe der Erfindung besteht darin, einen Codeleser der eingangs genannten Art derart weiterzubilden, dass er ohne die Vorsehung einer vom Codeleser getrennten Lichtquelle auch zum Lesen von DPM-Codierungen geeignet ist, wobei die jeweilige Codierung insbesondere mit größtmöglicher Sicherheit erkannt werden soll.

Diese Aufgabe wird erfindungsgemäß durch die Merkmale des Anspruchs 1 und insbesondere dadurch gelöst, dass sich die Lichtaustrittsfläche der im Codeleser integrierten Lichtquelle im Schärfentiefebereich oder nahe vor dem Schärfentiefebereich der Empfangsoptik des Codelesers befindet.

Bei aus dem Stand der Technik bekannten Codelesern befindet sich die Lichtaustrittsfläche in der Regel ungefähr im Bereich der Empfangsoptik des Codelesers und nicht in dessen von der Empfangsoptik vergleichsweise weit entferntem Schärfentiefebereich. Eine derartige bekannte Anordnung der Lichtaustrittsfläche im Bereich der Empfangsoptik führt dementsprechend auch immer zu einer Beleuchtung der zu lesenden Codierung unter einem Einfallswinkel, welcher mit der optischen Achse der Empfangsoptik im Wesentlichen übereinstimmt. Erfindungsgemäß wird nun ein solcher Codeleser derart modifiziert, dass die Lichtaustrittsfläche weiter entfernt von der Empfangsoptik, nämlich in im Bereich des Schärfentiefebereichs, konkret in der Regel etwas vor dem Schärfentiefebereich, angeordnet wird, was letztlich bedeutet, dass sich die Lichtaustrittsfläche sehr nahe bei der zu lesenden Codierung befindet, da auch die Codierung im Schärfentiefebereich der Empfangsoptik angeordnet werden muss, um ein korrektes Lesen derselben sicherstellen zu können. Aufgrund der räumlichen Nähe zwischen Lichtaustrittsfläche und Codierung wird es dann erfindungsgemäß möglich, die Codierung unter einem sehr schrägen Einfallswinkel derart zu beleuchten, dass Strahlung, die von solchen Bereichen des Trägermaterials reflektiert wird, welche keine Ausnehmungen aufweisen, nicht zur Empfangsoptik gelangt. Zur Empfangsoptik gelangen in erwünschter Weise nur solche Strahlungsanteile, welche von den Ausnehmungen reflektiert werden, so dass die Codierung einwandfrei erkannt werden kann. Der Winkel zwischen der optischen Achse der Empfangsoptik und den auf die Codierung auftreffenden Lichtstrahlen beträgt sinnvollerweise zwischen 70° und 95°, insbesondere zwischen 80° und 85°. Erfindungsgemäß wird also die Vorsehung einer separaten Lichtquelle auf vorteilhafte Art und Weise vermieden, was den wirtschaftlichen Gesamtaufwand der Anordnung verringert und zudem auch gemäß Stand der Technik noch nötige Justiervorgänge zwischen Lichtquelle und Codeleser einspart. Gemäß der Erfindung wird ein in einem einzigen Gehäuse unterzubringendes, einfach handhabbares, kompaktes Gerät bereitgestellt, welches ohne das Erfordernis irgendwelcher zusätzlicher Bauteile dazu geeignet ist, DPM-Codierungen problemlos zu lesen. Erreicht wird dies dadurch, dass sich die Lichtaustrittsfläche der im Codeleser integrierten Lichtquelle deutlich näher am Schärfentiefebereich der Empfangsoptik als an der Empfangsoptik selbst befindet.

Bevorzugt ist es, wenn sich die Lichtaustrittsfläche im Wesentlichen parallel zur optischen Achse der Empfangsoptik erstreckt. Bei einer derartigen Ausrichtung der Lichtaustrittsfläche kann besonders wirksam Lichtstrahlung erzeugt werden, welche schräg zur Oberfläche der Codierung verläuft. Die Lichtaustrittsfläche kann auch gegenüber der optischen Achse der Empfangsoptik geneigt verlaufen, vorteilhaft ist es aber in jedem Fall, wenn die Lichtaustrittsfläche nicht senkrecht zur optischen Achse der Empfangsoptik verläuft, da es im letztgenannten Fall zwar nicht unmöglich, aber dennoch schwierig wäre, die gewünschte schräge Einstrahlung des von der Lichtquelle des Codelesers stammenden Lichts zu realisieren.

Besonders vorteilhaft ist es, wenn ein von den restlichen Codeleser-Bestandteilen lösbarer Aufsatz vorgesehen ist, welcher die Lichtaustrittsfläche aufweist. In diesem Fall können dann herkömmliche Codeleser gemäß Stand der Technik erfindungsgemäß modifiziert oder nachgerüstet werden, indem sie mit einem Aufsatz der genannten Art versehen werden, welcher auf geeignete Weise dafür sorgt, dass Licht aus der im Aufsatz befindlichen Lichtaustrittsfläche austritt und dann letztlich schräg auf die zu lesende Codierung auftrifft.

Bei einer bevorzugten Ausführungsform der Erfindung befindet sich die Lichtquelle im Bereich der Empfangsoptik und/oder der Sensormatrix, wobei zwischen Lichtquelle und Lichtaustrittsfläche Lichtleitelemente angeordnet sind. In diesem Fall ist es dann beispielsweise möglich, wiederum herkömmliche Codeleser gemäß Stand der Technik einzusetzen und auch die in derartigen Codelesern integrierte Lichtquelle zu benutzen. Die Lichtquellen werden nämlich bei Codelesern gemäß Stand der Technik in der Regel im Bereich der Empfangsoptik und/oder im Bereich der Sensormatrix angeordnet, so dass die genannten Lichtleitelemente so positioniert werden können, dass sie das von der vorhandenen Lichtquelle abgestrahlte Licht zu der erfindungsgemäß vorgesehenen Lichtaustrittsfläche leiten. Die Vorsehung einer zusätzlichen Lichtquelle zu der in einem Codeleser gemäß Stand der Technik bereits vorhandenen Lichtquelle ist demgemäß nicht mehr nötig. Diese Ausführungsform lässt sich besonders vorteilhaft realisieren, wenn die Lichtleitelemente sowie die Lichtaustrittsfläche in einem von den restlichen Codeleser-Bestandteilen lösbaren Aufsatz untergebracht werden. Dieser Aufsatz, der dann lediglich reflektierende Flächen und eine beispielsweise als lichtdurchlässige Scheibe ausgestaltete Lichtaustrittsfläche aufweist, kann kostengünstig hergestellt und auf einfache Weise mit Codelesern gemäß Stand der Technik gekoppelt werden. So lässt sich ein erfindungsgemäßer Codeleser mit sehr geringem wirtschaftlichem Aufwand realisieren.

Die vorstehend erwähnten Lichtleitelemente werden bevorzugt als Lichtwellenleiter und/oder als Anordnung reflektierender Flächen ausgebildet. Die erfindungsgemäß eingesetzte Lichtquelle kann aus einer Anordnung von mehreren LEDs bestehen, welche um die optische Achse der Empfangsoptik, insbesondere ringförmig um die optische Achse der Empfangsoptik angeordnet sind. Wenn die von diesen LEDs ausgesandte Strahlung dann in geeigneter Weise, beispielsweise über Lichtwellenleiter oder reflektierende Flächen, zur Lichtaustrittsfläche geleitet wird, lässt sich eine ringförmige, schräge Bestrahlung der zu lesenden Codierung erreichen, bei der die Codierung praktisch aus allen Richtungen beleuchtet wird.

Insbesondere beim Einsatz von Lichtwellenleitern, aber auch bei der Verwendung reflektierender Flächen als Lichtleitelemente ist es bevorzugt, wenn den LEDs Linsen und/oder Blenden und/oder Ringreflektoren zur Erzeugung einer in Richtung der Lichtleitelemente gerichteten Strahlung zugeordnet sind. Insbesondere kann dabei jeder LED jeweils eine eigene Linse und/oder eine eigene Blende und/oder ein eigener Ringreflektor zugeordnet werden. Auf diese Weise lässt sich die Lichtstrahlung gezielt und mit wenigen Verlusten effizient zu der erfindungsgemäß vorgesehenen Lichtaustrittsfläche leiten.

Bei einer weiteren Ausführungsform der Erfindung kann sich die Lichtquelle, die insbesondere aus einer Anordnung von mehreren LEDs besteht, einschließlich der Lichtaustrittsfläche im oder nahe vor dem Schärfentiefebereich der Empfangsoptik befinden. Wenn eine derartige Anordnung in Verbindung mit Codelesern gemäß Stand der Technik, welche bereits eine integrierte Lichtquelle aufweisen, eingesetzt werden soll, kann die im Codeleser bereits vorhandene Lichtquelle deaktiviert werden, da die im Schärfentiefebereich der Empfangsoptik vorhandene Lichtquelle für die gewünschte schräge Beleuchtung zu lesender Codierungen sorgt.

Ebenso können beide Lichtquellen aber auch wechselweise oder gemeinsam aktiviert werden, um so unterschiedliche Kontrastsituationen zu erzeugen, die dann letztlich ein noch sichereres Erkennen einer Codierung durch einen Vergleich der mit verschiedenen Kontrastsituationen aufgenommenen Bilder ermöglichen.

Auch bei Vorsehung der Lichtquelle im Schärfentiefebereich der Empfangsoptik kann die Lichtquelle gemeinsam mit der ihr zugeordneten Lichtaustrittsfläche in einem von den restlichen Codeleser-Bestandteilen lösbaren Aufsatz vorgesehen werden, was wiederum die Verwendung mit einem Codeleser gemäß Stand der Technik vereinfacht.

Besonders bevorzugt ist es, wenn die Lichtquelle und die Empfangsoptik in einem Optikkopf untergebracht werden, welcher gemeinsam mit der erfindungsgemäß positionierten Lichtaustrittsfläche relativ zu den restlichen Codeleser-Bestandteilen in unterschiedlichen Positionen justierbar ist. Auf diese Weise kann ein entsprechend ausgebildeter Codeleser beispielsweise wahlweise mit frontseitigem oder mit seitlichem Lichtaustritt arbeiten und somit an die jeweiligen Einsatzbedingungen angepasst werden. Der Optikkopf mit Lichtquelle und Empfangsoptik bildet dann gemeinsam mit der erfindungsgemäß vorgesehenen Lichtaustrittsfläche und den gegebenenfalls vorgesehenen Lichtleitelementen eine Einheit, welche relativ zu den restlichen Codeleser-Bestandteilen in der jeweils erforderlichen Weise positioniert werden kann.

Weitere bevorzugte Ausführungsformen der Erfindung sind in den Unteransprüchen beschrieben.

Die Erfindung wird nachfolgend anhand von Ausführungsbeispielen unter Bezugnahme auf die Zeichnungen erläutert; in diesen zeigen:
- Fig. 1: ein mit frontaler Beleuchtung aufgenommenes Bild einer DPM-Codierung,
- Fig. 2: eine Anordnung gemäß Stand der Technik zum Lesen von DPM-Codierungen,
- Fig. 3: das Bild einer Codierung gemäß Fig. 1, welches von einer Anordnung gemäß Fig. 2 aufgenommen wurde,
- Fig. 4a: eine dreidimensionale Ansicht eines Codelesers gemäß Stand der Technik mit lösbarem Optikkopf,
- Fig. 4b: ein Codeleser gemäß Fig. 4a, bei dem die Position des Optikkopfes gegenüber Fig. 4a verändert wurde,
- Fig. 5: einen Schnitt durch eine erfindungsgemäße Anordnung mit reflektierenden Flächen,
- Fig. 6: eine Schnittdarstellung einer Anordnung gemäß Fig. 5, bei der die reflektierenden Flächen durch Lichtwellenleiter ersetzt sind,
- Fig. 7: eine Schnittdarstellung einer erfindungsgemäßen Anordnung mit im Schärfentiefebereich der Empfangsoptik vorgesehenen Lichtquellen,
- Fig. 8: einen erfindungsgemäß einsetzbaren Optikkopf mit den LEDs des Optikkopfes vorgeordneten Linsen, und
- Fig. 9: einen erfindungsgemäß einsetzbaren Optikkopf mit den LEDs des Optikkopfes vorgeordneten Blenden.

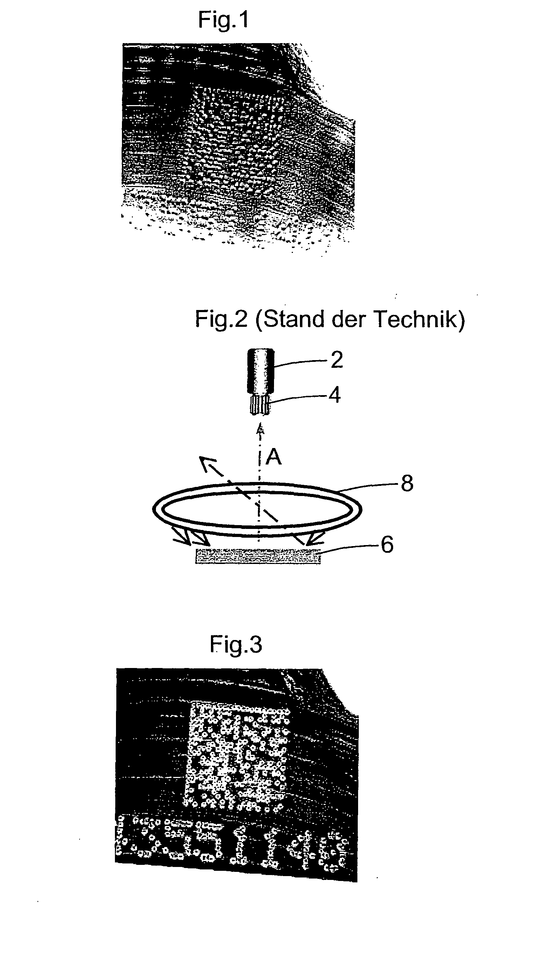

Die in Fig. 1 dargestellte Codierung wurde mittels Nadelprägen in einen Metallträger eingebracht und besteht aus einem quadratischen Feld von in einem vorgegebenen Muster angeordneten Vertiefungen, wobei jede Vertiefung durch eine in den Metallträger eingedrückte Nadel erzeugt wurde. Unterhalb des quadratischen Feldes befindet sich eine Anordnung von mehreren Zahlen, die ebenfalls aus einzelnen Vertiefungen gebildet werden.

Die Codierung gemäß Fig. 1 ist nicht besonders gut zu erkennen, da sie von einem Codeleser bei frontaler Beleuchtung, das heißt bei einer senkrecht zum Trägermaterial verlaufenden Beleuchtungsrichtung, aufgenommen wurde.

Fig. 2 zeigt eine schematische Darstellung einer Anordnung gemäß Stand der Technik, welche zu einem verbesserten Lesen von DPM-Codierungen, also beispielsweise auch einer Codierung gemäß Fig. 1, geeignet ist. Diese Anordnung besteht aus einer Kamera 2 mit integrierter Sensormatrix, wobei der Sensormatrix eine Empfangsoptik 4 vorgelagert ist. Unterhalb und im Gesichtsfeld der Kamera 2 ist ein Gegenstand 6 vorgesehen, welcher auf seiner der Kamera 2 zugewandten Oberfläche eine DPM-Codierung trägt.

Ferner ist eine ringförmige Beleuchtungsanordnung 8 vorgesehen, welche sich deutlich näher am Gegenstand 6 als an der Kamera 2 befindet. Der Durchmesser der Beleuchtungsanordnung 8 ist dabei derart gewählt, dass sich die ringförmig angeordneten Lichtquellen der Beleuchtungsanordnung 8 nicht senkrecht oberhalb der Codierung, sondern außerhalb der Codierung befinden. Die Beleuchtungsanordnung 8 ist somit dazu geeignet, die auf dem Gegenstand 6 befindliche Codierung in Richtung der in Fig. 2 eingezeichneten Pfeile von schräg oben zu beleuchten, so dass vom Gegenstand 6 spiegelnd reflektiertes Licht nicht in die Empfangsoptik 4 der Kamera 2 gelangt (siehe strichpunktierter Pfeil der Fig. 2).

Lediglich derjenige Lichtanteil, der von den Vertiefungen der Codierung reflektiert wird, gelangt zu einem wesentlichen Anteil entlang des Pfeils A zur Empfangsoptik 4 der Kamera 2, so dass die Vertiefungen von der Kamera 2 problemlos erkannt werden können.

Eine Codierung gemäß Fig. 1, welche von einer Anordnung gemäß Fig. 2 aufgenommen wurde, ist aus Fig. 3 ersichtlich. Fig. 3 zeigt, dass die Kontraste zwischen den mit Vertiefungen versehenen Bereichen des Trägermaterials und denjenigen Bereichen, die keine Vertiefungen aufweisen, deutlich größer sind, als die entsprechenden Kontraste gemäß Fig. 1.

Wie eingangs bereits erläutert, ist an der Anordnung gemäß Fig. 2 jedoch von Nachteil, dass eine separate Beleuchtungsanordnung 8 vorgesehen werden muss, welche überdies relativ zur Kamera 2 korrekt zu justieren ist.

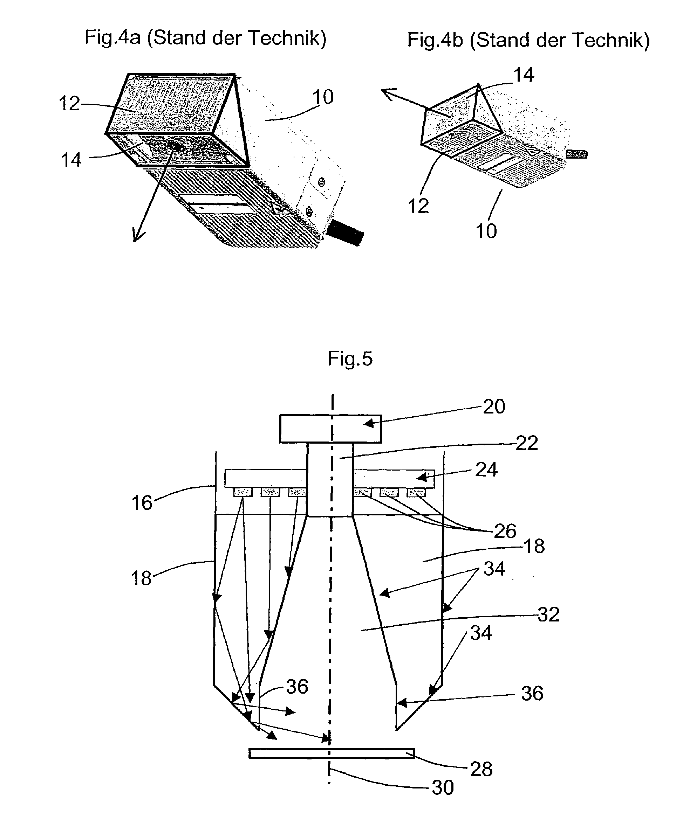

Fig. 4a zeigt in dreidimensionaler Ansicht einen Codeleser, der zum Lesen von Codierungen verwendet wird, die keinerlei Ausnehmungen oder Vertiefungen aufweisen. Ein derartiger Codeleser 10 besitzt in seinem stirnseitigen Bereich einen Optikkopf 12, welcher drei rechteckige Seitenflächen und zwei einander gegenüberliegende, dreieckige Stirnflächen aufweist. Eine der Seitenflächen ist dabei als Lichtaustrittsfläche 14 ausgebildet.

Im Optikkopf 12 befindet sich eine Sensormatrix, der eine Empfangsoptik vorgelagert ist. Um die Empfangsoptik herum sind als Lichtquellen einzelne LEDs angeordnet, welche zur Beleuchtung der zu lesenden Codierung dienen.

Bei einer Orientierung des Optikkopfes 12 gemäß Fig. 4a tritt das von den LEDs erzeugte Licht in Pfeilrichtung, also seitlich aus dem Codeleser 10 aus.

Fig. 4b, welche den Codeleser 10 gemäß Fig. 4a in verkleinerter Darstellung zeigt, veranschaulicht, dass der Optikkopf 12 auch in einer gegenüber Fig. 4a verdrehten Anordnung am Codeleser 10 derart befestigt werden kann, dass das von den LEDs erzeugte Licht stirnseitig aus dem Codeleser 10 austritt, wie es der in Fig. 4b eingezeichnete Pfeil veranschaulicht.

Der Codeleser gemäß den Fig. 4a und 4b kann dementsprechend durch eine geeignete Orientierung seines Optikkopfes 12 für unterschiedliche Anwendungsfälle bzw. Einbausituationen eingesetzt werden. Insbesondere lässt sich der Codeleser 10 gemäß den Fig. 4a und 4b durch die Vorsehung eines Aufsatzes am Optikkopf 12 erfindungsgemäß modifizieren. Ein solcher Aufsatz kann beispielsweise gemäß den Figuren 5 bis 7 ausgebildet sein.

Fig. 5 zeigt einen Schnitt durch einen Optikkopf 16 sowie einen daran befestigten Aufsatz 18, welcher zur Verwirklichung des erfindungsgemäßen Prinzips dient.

Der Optikkopf 16 beinhaltet eine Sensormatrix 20 sowie eine als Objektiv ausgestaltete Empfangsoptik 22, die der Sensormatrix 20 vorgelagert ist. Die Empfangsoptik 22 erstreckt sich dabei durch eine Platine 24 hindurch, die auf ihrer der Sensormatrix 20 abgewandten Unterseite eine Vielzahl von LEDs 26 trägt, die um die Empfangsoptik 22 herum angeordnet sind.

Im Gesichtsfelder Sensormatrix 20 bzw. der Einheit aus Sensormatrix 20 und Empfangsoptik 22 befindet sich ein Gegenstand 28, auf welchem eine DPM-Codierung angebracht ist. Der Optikkopf 16 kann auf seiner dem Gegenstand 28 zugewandten Seite mit einer durchlässigen Scheibe abgeschlossen sein.

Am Optikkopf 16 ist der genannte Aufsatz 18 befestigt, welcher sich vom Optikkopf 16 bis fast zum Gegenstand 28 erstreckt. Dabei umschließt der Aufsatz 18 einen im Wesentlichen ringförmigen Hohlraum, welcher die optische Achse 30 der Empfangsoptik 22 umgibt, wobei im Aufsatz 18 eine zentrale, sich mit zunehmendem Abstand vom Optikkopf 16 vergrößernde Öffnung 32 vorgesehen ist, die sicherstellt, dass vom Gegenstand 28 bzw. von der darauf angeordneten Codierung kommendes Licht ungehindert zur Empfangsoptik 22 gelangen kann.

Die Innenflächen 34 des ringförmigen Hohlraums sind spiegelnd oder zumindest reflektierend ausgebildet, so dass sie dazu geeignet sind, von den LEDs 26 kommendes Licht innerhalb des Hohlraums in seinen dem Gegenstand 28 zugewandten Endbereich zu leiten. Dies veranschaulichen die als Pfeile dargestellten Lichtstrahlen gemäß Fig. 5, die im linken Bereich des Hohlraums eingezeichnet sind.

In seinem unteren Endbereich besitzt der Aufsatz 18 eine kreisringförmige Lichtaustrittsfläche 36, welche sich nicht senkrecht oberhalb der zu lesenden Codierung, sondern außerhalb bzw. seitlich derselben erstreckt. Wie Fig. 5 verdeutlicht, sind die reflektierenden Innenflächen 34 des Aufsatzes 18 so angeordnet, dass das von den LEDs 26 kommende Licht letztlich in den Bereich der Lichtaustrittsfläche 36 geleitet wird, wo es in einer Orientierung schräg zur Oberfläche des Gegenstands 28 bzw. der darauf befindlichen Codierung aus der parallel zur optischen Achse 30 der Empfangsoptik 22 verlaufenden Lichtaustrittsfläche 36 austritt, so dass letztlich eine Beleuchtung der Codierung entsprechend dem in Verbindung mit Fig. 2 bereits erläuterten Prinzip erfolgt.

Der Aufsatz 18 kann dabei ein separates Bauteil darstellen, welches mit einem Optikkopf 12 gemäß den Fig. 4a und 4b koppelbar und gemeinsam mit diesem in der jeweils gewünschten Orientierung mit einem Codeleser 10 verbindbar ist. Besonders vorteilhaft ist in diesem Zusammenhang, dass ein Aufsatz 18 gemäß Fig. 5 keinerlei Stromversorgung benötigt und auch sonst kein Eingreifen in dem Optikkopf 16 erfordert, so dass er in äußerst einfacher Weise auf einen Optikkopf 16 mechanisch aufgesetzt und mit diesem verbunden werden kann.

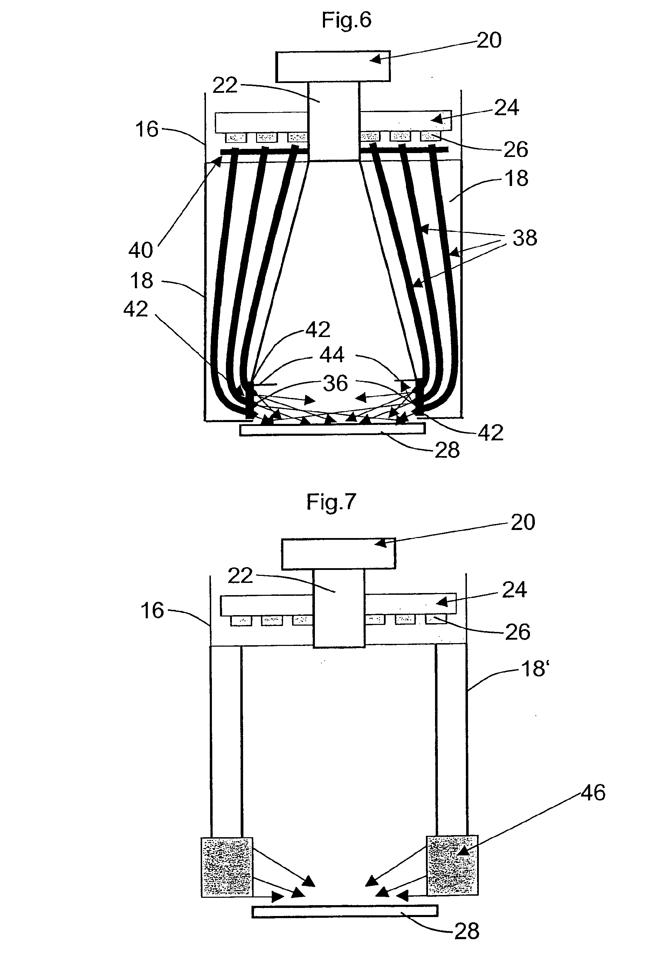

Fig. 6 zeigt eine in der Ausbildung des Optikkopfs 16 und der Form des Aufsatzes 18 der Fig. 5 entsprechende Anordnung, so dass hier auch entsprechende Bezugszeichen verwendet sind.

Der Unterschied gegenüber Fig. 5 besteht darin, dass anstelle der reflektierenden Innenflächen 34 Lichtwellenleiter 38 vorgesehen sind, die im Optikkopf 16 in deren Endbereichen von einer Halteplatte 40 gehalten sind. Konkret ist für jede LED 26 ein separater Lichtwellenleiter 38 vorgesehen, welcher dafür sorgt, das Licht von der jeweiligen LED 26 in den Bereich der Lichtaustrittsfläche 36 zu leiten, so dass das derart geführte Licht direkt aus den Lichtwellenleitern 38 schräg zur Oberfläche des Gegenstands 28 austreten kann und somit für eine Beleuchtung sorgt, die derjenigen gemäß Fig. 5 weitgehend entspricht. Um für die richtige Orientierung der Lichtwellenleiter 38 im Bereich der Lichtaustrittsfläche 36 zu sorgen, ist auch dort ein entsprechendes, beispielsweise kreisringförmig ausgebildetes Halteelement 42 vorhanden, in welchem die Enden der Lichtwellenleiter 38 fixiert sind.

Oberhalb der Lichtaustrittsfläche 36 steht radial nach innen ein Abschattungselement 44 hervor, welches z.B. eine Kreisringform besitzen kann, und sich senkrecht zur optischen Achse der Empfangsoptik 22 erstreckt. Dieses Abschattungselement 44 dient dazu, zu verhindern, dass aus den Enden der Lichtwellenleiter 38 austretendes Licht direkt und ohne Reflexion am Gegenstand 28 zur Empfangsoptik 22 gelangt.

Die in Fig. 7 dargestellte Anordnung besitzt einen Optikkopf 16, welcher identisch zu einem Optikkopf 16 gemäß Fig. 5 ausgebildet ist. Dieser Optikkopf 16 ist gemäß Fig. 7 mit einem Aufsatz 18' gekoppelt, welcher sich ebenso wie die Aufsätze 18 gemäß den Fig. 5 und 6 fast bis zum Gegenstand 28 erstreckt. Der Aufsatz 18' weist im Wesentlichen die Form eines Kreiszylinders auf und besitzt an seinem unteren, dem Gegenstand 28 zugewandten Endbereich eine kreisringförmige Lichtquelle 46, welche so ausgebildet ist, dass aus ihr austretendes Licht schräg auf die Oberfläche des Gegenstands 28 auftrifft. Die Lichtquelle 46 muss dabei vom Codeleser über den Optikkopf 16 mit Spannung versorgt werden. Alternativ ist es auch möglich, im Aufsatz 18' eine Spannungsquelle in Form einer Batterie oder eines Akkus vorzusehen.

Wie bereits erläutert, kann eine Anordnung gemäß Fig. 7 so ausgeführt werden, dass die Lichtquelle 46 und die LEDs 26 wechselweise oder auch gemeinsam aktiviert werden können.

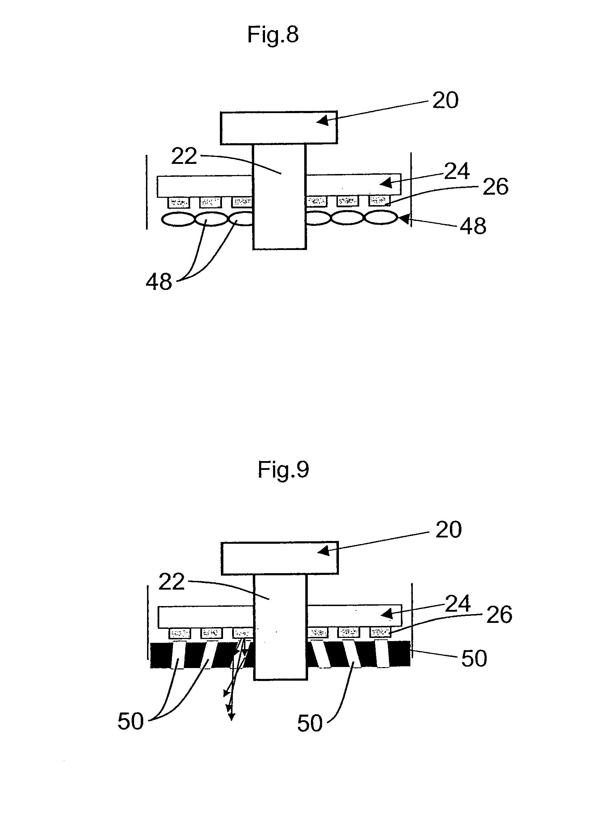

Die Fig. 8 und 9 zeigen jeweils einen Optikkopf 16, wie er in Verbindung mit Anordnungen gemäß den Fig. 4 bis 7 zum Einsatz gelangen kann.

Der Optikkopf gemäß Fig. 8 ist gegenüber dem Optikkopf 16 der Fig. 5 bis 7 dadurch verbessert, dass jeder LED 26 eine eigene Linse 48 vorgeschaltet ist, die ausgehend von jeder LED 26 eine gerichtete Strahlung erzeugt, die beispielsweise besonders effizient auf reflektierende Innenflächen 34 eines Aufsatzes 18 gemäß Fig. 5 geleitet werden kann.

Ein entsprechender Effekt lässt sich erzielen, wenn die Linsen 48 gemäß Fig. 9 durch Blenden 50 oder Ringreflektoren ersetzt werden.

### Bezugszeichenliste

- 2: Kamera
- 4: Empfangsoptik
- 6: Gegenstand
- 8: Beleuchtungsanordnung
- 10: Codeleser
- 12: Optikkopf
- 14: Lichtaustrittsfläche
- 16: Lichtoptikkopf
- 18: Aufsatz
- 20: Sensormatrix
- 22: Empfangsoptik
- 24: Platine
- 26: LEDs
- 28: Gegenstand
- 30: optische Achse
- 32: Öffnung
- 34: Innenflächen
- 36: Lichtaustrittsfläche
- 38: Lichtwellenleiter
- 40: Halteplatte
- 42: Halteelement
- 44: Abschattungselement
- 46: Lichtquelle
- 48: Linsen
- 50: Blenden

## Patentansprüche

1. Codeleser mit einer integrierten Lichtquelle (26, 46) zur Ausleuchtung eines Lesebereichs, einer Sensormatrix (20) und einer dieser vorgelagerten Empfangsoptik (22),
wobei sich die Lichtaustrittsfläche (36) der Lichtquelle (26, 46) im Schärfentiefebereich oder nahe vor dem Schärfentiefebereich der Empfangsoptik (22) befindet,
**dadurch gekennzeichnet,**
**dass** die Lichtquelle (26, 46) und die Empfangsoptik (22) in einem Optikkopf untergebracht sind, welcher relativ zu den restlichen Codeleser-Bestandteilen in unterschiedlichen Positionen justierbar ist.

2. Codeleser nach Anspruch 2,
**dadurch gekennzeichnet,**
**dass** sich die Lichtquelle (26) im Bereich der Empfangsoptik (22) und/oder der Sensormatrix (20) befindet, wobei zwischen Lichtquelle (26) und Lichtaustrittsfläche (36) Lichtleitelemente (34, 38) angeordnet sind.

3. Codeleser nach Anspruch 2,
**dadurch gekennzeichnet,**
**dass** die Lichtleitelemente als Lichtwellenleiter (38) und/oder als Anordnung reflektierender Flächen (34) ausgebildet sind.

4. Codeleser nach einem der Ansprüche 1 bis 3,
**dadurch gekennzeichnet,**
**dass** die Lichtquelle (26) aus einer Anordnung von mehreren LEDs (26) besteht, welche um die optische Achse (30) der Empfangsoptik (22) angeordnet sind.

5. Codeleser nach Anspruch 4,
**dadurch gekennzeichnet,**
**dass** den LEDs (26) Linsen (48) und/oder Blenden (50) zur Erzeugung einer in Richtung der Lichtleitelemente (34, 38) gerichteten Strahlung zugeordnet sind, wobei insbesondere jeder LED (26) jeweils eine Linse (48) und/oder eine Blende (50) und/oder ein Ringreflektor zugeordnet ist.

6. Codeleser nach zumindest einem der Ansprüche 1 bis 5,
**dadurch gekennzeichnet,**
**dass** sich die Lichtquelle (46), die insbesondere aus einer Anordnung von mehreren LEDs besteht, einschließlich der Lichtaustrittsfläche (36) im oder nahe vor dem Schärfentiefebereich der Empfangsoptik (22) befindet.

7. Codeleser nach zumindest einem der Ansprüche 1 bis 6,
**dadurch gekennzeichnet,**
**dass** die Lichtquelle (46) gemeinsam mit der ihr zugeordneten Lichtaustrittfläche (36) in einem vom den restlichen Codeleser-Bestandteilen lösbaren Aufsatz (18') vorgesehen ist.

8. Codeleser nach einem der vorhergehenden Ansprüche,
**dadurch gekennzeichnet,**
**dass** sich die Lichtaustrittsfläche (36) in wesentlichen parallel zur optischen Achse (30) der Empfangsoptik (22) erstreckt.

9. Codeleser nach einem der vorhergehenden Ansprüche,
**dadurch gekennzeichnet,**
**dass** ein von den restlichen Codeleser-Bestandteilen lösbarer Aufsatz (18, 18') vorgesehen ist, welcher die Lichtaustrittsfläche (36) aufweist.
